# EUROPEAN PATENT SPECIFICATION

(11) **EP 2 853 734 B1**
(45) Date of publication and mention of the grant of the patent: **13.07.2016**
(21) Application number: 14186383.7
(22) Date of filing: 25.09.2014
(51) Int. Cl.: F03D 80/60

(54) **Ventilation system for a renewable energy power generating apparatus**
Vorrichtung zur Erzeugung erneuerbarer Energie
Appareil de génération d'énergie renouvelable

(30) Priority: 26.09.2013 JP 2013199950
(43) Date of publication of application: 01.04.2015
(73) Proprietor: MITSUBISHI HEAVY INDUSTRIES, LTD., Tokyo 108-8215 (JP)
(72) Inventor: Akashi, Yu, TOKYO, 108-8215 (JP)
(74) Representative: Intès, Didier Gérard André

(56) References cited:
- EP-A1- 2 161 446
- EP-A1- 2 639 450
- CN-A- 102 307 459
- CN-A- 102 828 921
- CN-A- 102 996 355
- US-A1- 2011 187 119
- US-A1- 2012 032 448

## Description

### TECHNICAL FIELD

The present disclosure relates to a renewable energy power generating apparatus which generates electric power using renewable energy. Here, a renewable energy power generating apparatus is a power generating apparatus which uses renewable energy such as wind, tidal current, ocean current, and river current. It may be, for instance, a wind turbine power generating apparatus, a tidal current power generating apparatus, an ocean current power generating apparatus, a river current power generating apparatus, or the like.

### BACKGROUND

In recent years, from the perspective of preserving the global environment, a wind turbine power generating apparatus using wind force and other renewable energy power generating apparatuses including power generating apparatuses using tidal current, ocean current, or river current have become widely used. A renewable energy power turbine apparatus converts kinetic energy of wind, tidal current, ocean current or river current into rotation energy of a rotor, and then coverts the rotation energy of the rotor into electric power by a generator. For instance, a wind turbine power generating apparatus includes a rotor to which blades that rotate upon receiving wind are coupled, the rotor being supported on a nacelle rotatably. The nacelle is supported on an upper end of a tower that is disposed standing upright on the ocean or on the ground.

Normally, various kinds of equipment such as a generator, a transmission, and a control panel are disposed in the interior space of the tower or the nacelle. The equipment includes precision equipment. Thus, it is desirable to maintain the interior space of the tower or nacelle in a substantially sealed state so that impurity substances included in the surrounding environment of the renewable energy power generating apparatus do not enter the interior space, for the purpose of protecting the equipment. However, as the equipment disposed inside the interior space of the tower or the nacelle includes equipment which produces heat, there is a risk of such equipment becoming a heat source which increases temperature in the interior space of the tower or the nacelle. Thus, conventionally, as described in Patent Documents 1 to 3 for instance, some techniques are used to ventilate the interior space of the tower or the nacelle.

### Citation List

### Patent Literature

Patent Document 1: WO2012/002491A
Patent Document 2: JP2011-163179A
Patent Document 3: CN102828921A

### SUMMARY

In recent years, a renewable energy power generating apparatus is increasing in size for the purpose of improving the power generating efficiency, also increasing the height of its tower. In accordance, the amount of heat from the equipment disposed in the interior space of the nacelle or the tower is also increasing. Thus, it is all the more necessary to improve the ventilation mechanism in order to address increase in the volume of the space to be ventilated and increase in the amount of heat from the equipment, which becomes a heat source. However, the ventilation mechanisms described in Documents 1 to 3 hardly satisfy such need. Thus, further improvement is required to achieve a ventilation mechanism which is suitable for recent renewable energy power generating apparatuses.

An object of at least one embodiment of the present invention is to provide a renewable energy power generating apparatus which includes a ventilation mechanism capable of ventilating an interior space of a tower appropriately.

A renewable energy power generating apparatus according to at least one embodiment of the present invention as defined by claim 1 is for generating electric power from renewable energy, and includes: a rotational shaft configured to rotate by the renewable energy; a generator configured to generate electric power by rotation of the rotational shaft; a nacelle which accommodates the rotational shaft; a tower configured to support the nacelle; at least one heat source disposed in an interior space of the tower; and a tower ventilation mechanism configured to create ventilation flow in the interior space of the tower so that heat from the at least one heat source is discharged to an outside of the tower. Also, an interior space of the nacelle and the interior space of the tower are isolated from each other so that air is prevented from flowing therebetween. Further, the tower ventilation mechanism includes: at least one intake port disposed on an upper part of the tower; at least one discharge port disposed on a lower part of the tower; and a fan configured to forcedly create the ventilation flow, which flows downward in a vertical direction from the intake port to the discharge port.

Generally, a tower and a nacelle have different equipment installed in their interior spaces and different spatial volumes, and thus different cooling performances are required. Normally, the interior space of a nacelle is smaller than the interior space of a tower, and also there is more equipment that serves as a heat source in the interior space of a nacelle than in the interior space of a tower. If these interior spaces are to be ventilated by a common ventilation mechanism, cooling performance suitable for the nacelle would be required, increasing installation cost and power cost of the ventilation mechanism.

Thus, in the above renewable energy power generating apparatus, the interior space of the nacelle is isolated from the interior space of the tower so that the air is prevented from flowing through therebetween. As a result, it is possible to separate the nacelle ventilation mechanism for ventilating the interior space of the nacelle from the tower ventilation mechanism for ventilating the interior space of the tower, and to reduce the installation cost and power cost required for ventilation by carrying out suitable ventilation for each interior space.

Further, in a general renewable energy power generating apparatus, a filter is disposed on an intake port for ventilation so as to prevent entrance of impurity substances that exist in the surrounding environments. In an environment with a large amount of impurity substances, it may be necessary to provide a filter of high performance, which may be expensive. Moreover, a filter of high performance generally tends to cause grater pressure loss, which makes it inevitable to increase the size of a fan in a case where a fan for ventilation is provided.

Thus, in the above renewable energy power generating apparatus, an intake port for ventilation is disposed on an upper part of a tower. The concentration of the impurity substances such as salt and dust in the air, which affect equipment, generally descends with increase in the level from the ground or water surface. Accordingly, with the intake port disposed around the upper part of the tower where concentration of the impurity substances included in the surrounding air is low, a cheap filter that causes less pressure loss can be used (as the case may be, the filter itself can be omitted) and the cost can be reduced. For instance, in an offshore wind turbine power generating apparatus, as the tower is disposed on the ocean where concentration of salt in the air is low and it is necessary to prevent corrosion of equipment due to salt. Here, with the intake port disposed at a high level that is the upper part of the tower, it possible to use air with relatively low concentration of salt as ventilation air. Especially, since a renewable energy power generating apparatus of a large size has a tower of great height, concentration of impurity substances around the upper part of the tower may be considerably low. Thus, arranging an intake port at the upper part of the tower brings about high effect in improving efficiency of the ventilation mechanism and reducing the cost. Further, by providing a discharge port on a lower part of the tower and carrying out forced ventilation by a fan, it is possible to uniformly distribute the air incorporated from the upper part of the tower into the interior space of the tower, improving the effect of cooling the equipment.

The entire length of the tower is at least 80m, and the at least one intake port is disposed within a range of not greater than 15% of the entire length of the tower from an upper end of the tower.

As described above, by providing an intake port at high altitude where the concentration of impurity substances around is low, it is possible to further reduce the ventilation cost.

In another embodiment, the at least one discharge port has an opening area which causes such pressure loss that the tower is maintained to have positive pressure inside. As described above, by maintaining the interior space of the tower to have positive pressure, it is possible to achieve a tower configuration in which impurity substances are unlikely to enter the interior space of the tower.

In another embodiment, the at least one intake port has an opening area which causes such pressure loss that the tower is maintained to have negative pressure inside.

As described above, by maintaining the interior space of the tower to have negative pressure, it is possible to prevent gas, or liquid, as the case may be, from leaking to the outside, and thus to discharge the gas or liquid under control.

In one embodiment, the interior space of the tower is divided into a plurality of layers by at least one floor board in the vertical direction. Also, the tower ventilation mechanism includes an intake-air non-return part provided for at least one of the intake ports that are disposed on different layers of the tower, respectively.

Generally, although the layers of the interior space of the tower communicate with one another via paths for transferring equipment and workers, they are mostly partitioned by the floor boards, making it difficult for the air to flow through between the floors. Thus, by providing intake ports for a plurality of layers as in the above embodiment, it is possible to promote ventilation in the tower. Also, since the plurality of intake ports are disposed on different layers of the tower, respectively, the intake ports being disposed in different positions in the height direction, it is possible to prevent considerable decrease in strength of the tower. Furthermore, since there is a risk of reverse flow of the ventilation air flowing toward the outside from the interior space of the tower via one of the intake ports when the balance is lost in the amount of intake air from the intake ports, an intake-air non-return part is provided, so that it is possible to prevent reverse flow and to carry out smooth ventilation.

In one embodiment, the tower ventilation mechanism includes an impurity-substance removing part disposed on the at least one intake port.

In the present description, impurity substances mean substances included in the air which may affect the equipment disposed in the interior space of the tower, such as salt, water vapor and dust, for instance.

As described above, by providing an impurity-substance removing part on at least one intake port, it is possible to prevent impurity substances from entering the interior space of the tower and to protect the equipment installed in the interior space of the tower.

In some embodiments, the interior space of the tower is divided into a plurality of layers in the vertical direction. Also, the at least one heat source includes a backup generator disposed on a layer which is positioned in a path of the ventilation flow from among the plurality of layers.

Here, a backup generator means a generator which is not used for normal operation of the wind turbine power generating apparatus, but is used under, for instance, circumstances where an external power source cannot be secured. For instance, the backup generator is used to operate rotating devices or as a power source for lightings for the purpose of carrying out maintenance of the equipment while the wind turbine power generating apparatus is stopped for a long time.

As described above, by arranging the backup generator in the path of the ventilation flow, it is possible to discharge the heat generated by the backup generator efficiently by the ventilation flow. Also, since the backup generator is not regularly used, the fan may be driven in accordance with the amount of heat generation of the backup generator only when it is used, which makes it possible to reduce the running cost of power.

In one embodiment, the backup generator is an engine generator which uses the ventilation flow as combustion air.

In a case where a backup generator is an engine generator, the ventilation flow can be used for cooling the backup generator and also as combustion air, which enables effective use of the ventilation flow.

In one embodiment, the interior space of the tower includes: a ventilation space which is maintained to have negative pressure and through which the ventilation flow passes; and a generator chamber which is maintained to have positive pressure and which is isolated from the ventilation space. Also, the backup generator is accommodated in the generator chamber.

When the ventilation space of the tower is maintained to have negative pressure, a backup generator being disposed in negative pressure atmosphere may lead to shortage of combustion air, causing incomplete combustion in the engine of the backup generator. Thus, a generator chamber which is maintained to have positive pressure is disposed in the interior space of the tower and a backup generator is disposed in the generator chamber. As a result, it is possible to achieve stable combustion of the engine, which enables the backup generator to be driven stably.

In another embodiment, the interior space of the tower includes: a ventilation space through which the ventilation flow passes; and a generator chamber which is isolated from the ventilation space and into which a part of the ventilation flow is incorporated as ventilation air. Also, the backup generator is accommodated in the generator chamber.

As a result, it is possible to adjust the amount of ventilation of the generator chamber separately from the ventilation space of the tower, so that ventilation of the interior space of the tower can be carried out efficiently by operating the ventilation mechanism only when the generator chamber is in use. Also, in the case where the backup generator is an engine generator, there may be impurity substances included in the exhaust air discharged from the backup generator. Thus, the backup generator is disposed in the generator chamber, which is isolated from the ventilation space of the tower, and the exhaust air from the backup generator is directly discharged to the outside, which makes it is possible to protect other equipment arranged in the ventilation space of the tower.

In some embodiments, the at least one heat source includes a transformer connected to the generator. The interior space of the tower includes: a ventilation space through which the ventilation flow passes; and a transformer chamber which is isolated from the ventilation space and which accommodates the transformer. Also, the renewable energy power generating apparatus further comprises a coolant water line which is disposed in the transformer chamber and configured to convey coolant water for cooling the transformer.

A transformer functions to transform electric power which has been generated by using renewable energy. Generally, a transformer is constantly used during normal operation of a renewable energy power generating apparatus. Also, the amount of heat generation by a transformer is larger than that of other equipment. Thus, by providing a transformer chamber isolated from the ventilation space in the tower and cooling the transformer chamber by water cooling which has higher cooling performance than air cooling, it is possible to cool the transformer effectively.

In one embodiment, the interior space of the tower is divided into a plurality of layers by at least one floor board in the vertical direction, and the at least one intake port is disposed between: an isolation part between the interior space of the nacelle and the interior space of the tower; and a floor board closest to the isolation part.

A gap between the isolation part isolating the interior space of the nacelle from the interior space of the tower and the floor board closest to this isolation part is the highest layer in the interior space of the tower. This layer is the highest from among the positions where the outside air can be taken in into the interior space of the tower, and thus the concentration of impurity substances around this level is the lowest. Accordingly, with the intake ports disposed here, it is possible to further reduce the ventilation cost.

In some embodiments, the renewable energy power generating apparatus further includes an oil pan disposed between the interior space of the tower and the interior space of the nacelle and configured to receive oil which has leaked out from equipment disposed in the interior space of the nacelle. Also, the oil pan is configured to isolate the interior space of the nacelle and the interior space of the tower from each other.

According to the above embodiment, an oil pan for receiving oil that has leaked from the interior space of the nacelle is disposed between the interior space of the nacelle and the interior space of the tower, the oil pan having a function to isolate the interior space of the nacelle from the interior space of the tower. As a result, it is not necessary to additionally install a structure for isolating the interior space of the nacelle from the interior space of the tower. Thus, the structure of the tower can be simplified.

In one embodiment, the equipment includes a hydraulic transmission configured to transmit rotation of the rotational shaft to the generator.

In some embodiments, the renewable energy power generating apparatus is a floating wind turbine power generating apparatus in which the tower is disposed on a floating body. A floating wind turbine power generating apparatus is disposed on the ocean and thus much salt is contained in the surrounding air, which may cause corrosion of equipment. Thus, by employing a configuration of the above described embodiments for a floating wind turbine power generating apparatus, it is possible to carry out ventilation for the interior space of the tower using the air around the upper part of the tower, the air containing relatively less salt.

According to at least one embodiment of the present invention, the interior space of the nacelle is isolated from the interior space of the tower so that the air is prevented from flowing through therebetween. Thus, by carrying out suitable ventilation for each space, it is possible to reduce the installation cost and power cost required for the ventilation.

Further, since the intake ports for ventilation are disposed on the upper part of the tower, it is possible to use air with low concentration of impurity substances as ventilation air, which enables use of a cheaper filter which causes less pressure loss. As a result, it is possible to reduce the cost.

Moreover, by providing the discharge port at the lower part of the tower and performing forced ventilation by a fan, it is possible to distribute the air incorporated from the upper part of the tower uniformly over the interior space of the tower, and thus to improve the effect of cooling the equipment.

### BRIEF DESCRIPTION OF DRAWINGS

FIG. 1 is a side view of the first exemplary configuration of a wind turbine power generating apparatus according to one embodiment of the present invention.
FIG. 2 is a side view of the second exemplary configuration of a wind turbine power generating apparatus according to one embodiment of the present invention.
FIG. 3 is a side view of the third exemplary configuration of a wind turbine power generating apparatus according to one embodiment of the present invention.
FIG. 4 is a side view of the fourth exemplary configuration of a wind turbine power generating apparatus according to one embodiment of the present invention.
FIG. 5 is a side view of the fifth exemplary configuration of a wind turbine power generating apparatus according to one embodiment of the present invention.
FIG. 6 is a perspective view of an example of a sealing structure in which an oil pan is used.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following description, a wind turbine power generating apparatus will be described as an example of a renewable energy power generating apparatus. However, a renewable energy power generating apparatus according to the embodiment of the present invention may be applied to other renewable energy power generating apparatuses such as a tidal current power generating apparatus, an ocean current power generating apparatus, and a river current power generating apparatus.

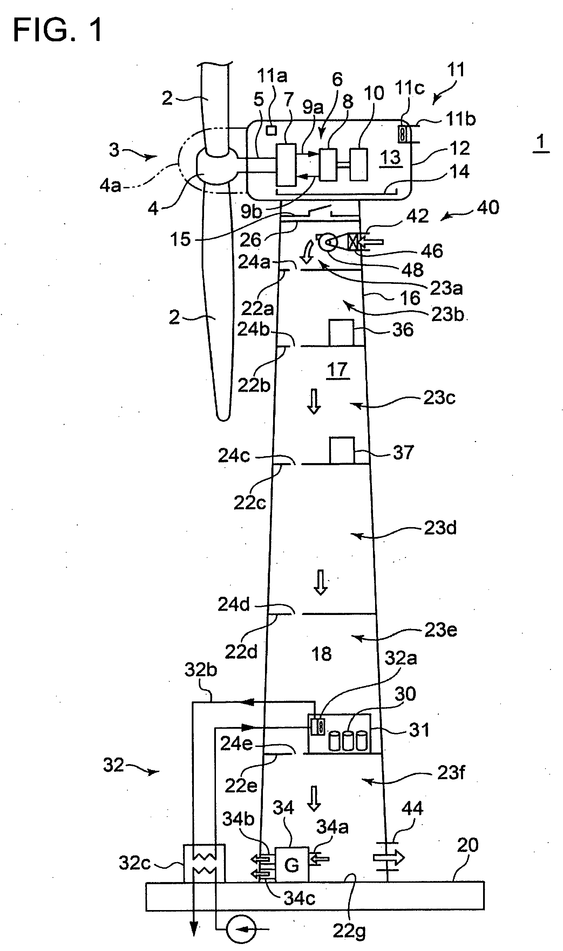

FIGs. 1 to 5 are side views of the first to fifth exemplary configurations of a wind turbine power generating apparatus according to one embodiment of the present invention. First, the common configuration of the first to fifth exemplary configurations illustrated in FIGs. 1 to 5 will be described, and then features varying between the exemplary configurations will be described.

In reference to FIGs. 1 to 5, a wind turbine power generating apparatus 1 according to one embodiment includes a rotor 3 having at least one blade 2 and a hub 4, a rotational shaft 5 coupled to the hub 4 of the rotor 3, a generator 10 which generates electric power, and a drive train 6 which transmits rotational energy of the rotational shaft 5 to the generator 10.

Here, the hub 4 is covered by a hub cover 4a. Also, at least the rotational shaft 5 may be accommodated in a nacelle 12 which is disposed on a tower 16 standing upright on the ocean or on the ground. The rotational shaft 5 is supported rotatably on the nacelle 12.

The interior space 13 of the nacelle 12 is configured to be kept in substantially airtight state of being isolated from the outside air, except for at an intake port 11a and a discharge port 11b. The interior space 13 of the nacelle 12 includes equipment which becomes a heat source. For instance, a heat source that is likely to be disposed in the interior space 13 of the nacelle 12 would be the drive train 6, the generator 10, a control panel (not illustrated) for controlling or monitoring the drive train 6 or the generator 10, and so on. In order to discharge heat from the equipment being a heat source to the outside of the tower 16, a nacelle ventilation mechanism 11 for creating ventilation flow inside the interior space 13 of the nacelle 12 is provided. The nacelle ventilation mechanism 11 may include an intake port 11a, a discharge port 11b, a fan 11c disposed on the intake port 11a or the discharge port 11b, and a filter (not illustrated) which is disposed on the intake port 11a and the discharge port 11b for removing the impurity substances, which are included in the air around the wind turbine power generating apparatus 1, from ventilation air. Here, the nacelle ventilation mechanism 11 is provided separately from the tower ventilation mechanism 40, 50, which will be described below.

Further, in the interior space 13 of the nacelle 12 or in the vicinity of the nacelle 12, at least one oil pan 14, 15 for receiving oil (such as operating oil of the hydraulic transmission 6) that has leaked from the equipment disposed in the interior space 13 may be disposed. For instance, an oil pan 14 is disposed on a floor surface of the nacelle 12. Further, another oil pan 15 is disposed between the interior space 17 of the tower 16 and the interior space 13 of the nacelle 12.

The drive train 6 may be a hydraulic transmission. In this case, the hydraulic transmission 6 includes a hydraulic pump 7 coupled to the rotational shaft 5 and a hydraulic motor 8 connected to the hydraulic pump 7 via a high pressure oil line 9a and a low pressure oil line 9b. The hydraulic pump 7 is driven by the rotational shaft 5 to increase pressure of the operating oil, thereby generating high-pressure operating oil (pressurized oil). The pressurized oil generated in the hydraulic pump 7 is supplied to the hydraulic motor 8 through the high pressure oil line 9a and then the hydraulic motor 8 is driven by this operating oil. Low-pressure operating oil which has performed work in the hydraulic motor 8 is returned to the hydraulic pump 7 again through the low pressure oil line 9b. Also, an output shaft of the hydraulic motor 8 is connected to a rotation shaft of the generator 10, so that rotation of the hydraulic motor 8 is inputted into the generator 10.

Although FIG. 1 illustrates a case where a hydraulic transmission is used as the drive train 6, the drive train is not limited to this and a drive train which is configured to transmit torque of the rotational shaft 5 to the generator 10 via a gearbox may be employed. Alternatively, the rotational shaft 5 and the generator 10 may be coupled to each other directly without the drive train 6. Further, although FIG. 1 illustrates a case where the drive train 6 and the generator 10 are disposed in the interior space 13 of the nacelle 12 as an example, at least one of the above may be disposed in the interior space 17 of the tower 16.

The tower 16 is disposed to stand upright on a base 20 that is installed on the ocean or on the ground.

In some embodiments, at least one piece of equipment which becomes a heat source is disposed in the interior space 17 of the tower 16. For instance, the piece of equipment may be a transformer 30, a backup generator 34, or other equipment 36, 37. The other equipment 36, 37 may be, for instance, a control panel which controls or monitors power transmission of the wind turbine power generating apparatus 1, a motor of an elevator for transferring components and workers, a fan for ventilation included in the tower ventilation mechanism 40, 50, which will be described below, and so on.

In one embodiment, the interior space 17 of the tower 16 is divided into a plurality of floors (layers) 23 (23a to 23f) by a plurality of floor boards 22 (22a to 22e) in the vertical direction. The floors 23 communicate with one another via opening parts 24 (24a to 24e) to allow the air to flow through therebetween. The opening parts 24 described hereinafter may be openings for allowing floor-passing members such as electric cables and pipes to pass through, openings for allowing elevators and ladders for transferring equipment and workers to pass through, or gaps between the floor boards 22 and the periphery wall of the tower 16.

FIGs. 1 to 5 illustrate, as an example, configurations in which the backup generator 34 is disposed on the floor 23f of the lowest layer, the transformer 30 is disposed on the floor 23e above the lowest layer, and the pieces of equipment 36, 37 are disposed on the floors 23b, 23c, respectively. Here, the highest floor may be a floor formed by the oil pan 15.

As described above, a variety of equipment each of which becomes a heat source is disposed in the interior space 17 of the tower 16. Thus, in the present embodiment, a tower ventilation mechanism 40, 50 for creating ventilation flow in the interior space 17 of the tower 16 is included so that heat generated by at least one of the heat sources may be discharged to the outside of the tower 16. The tower ventilation mechanism 40, 50 is provided separately from the above described nacelle ventilation mechanism 11.

The tower ventilation mechanism 40, 50 is configured to create ventilation flow in the interior space 17 of the tower 16 so that heat from the equipment (31, 34, 35, 36) being the at least one heat source is discharged to the outside of the tower 16.

Further, the interior space 17 of the tower 16 and the interior space 13 of the nacelle 12 are isolated from each other so that air is prevented from flowing through the spaces. For instance, an isolation part 26 which is disposed between the interior space 17 of the tower 16 and the interior space 13 of the nacelle 12 isolates the interior space 17 of the tower 16 from the interior space 13 of the nacelle 12. The isolation part 26 may include a floor board 22, or an oil pan 14 which will be described below.

In one embodiment, the tower ventilation mechanism 40, 50 includes at least one intake ports 42, 42a, 42b, 52a, 52b disposed on the upper part of the tower 16, at least one discharge ports 44, 44a, 44b, 54, 64 disposed on the lower part of the tower 16, and at least one fans 48, 48a, 48b, 58, 62. Each fan 48, 48a, 48b, 58, 62 is disposed on a certain position on the tower 16. For instance, forced draft fans 48, 48a, 48b may be disposed on the intake ports 42, 42a, 42b, 52a, 52b, and induced draft fans 58, 62 may be disposed on the discharge ports 44, 44a, 44b, 54, 64. In order to further ensure creation of the ventilation air, fans may be disposed on both of the intake ports 42, 42a, 42b, 52a, 52b and the discharge ports 44, 44a, 44b, 54, 64. The fans 48, 48a, 48b, 58, 62 are selectively provided on the basis of the volume (which may include the volume of a generator chamber 60 described below) of the ventilation space 18 in the tower 16, the amount of heat generation by the equipment 31, 34, 35, 36 being a heat source disposed inside the tower, the temperature of outside air which is incorporated as ventilation air, etc. Then, using the fans 48, 48a, 48b, 58, 62, ventilation flow (illustrated as outlined arrows in the drawing) which flows downward in the vertical direction from the intake ports 42, 42a, 42b, 52a, 52b to the discharge ports 44, 44a, 44b, 54, 64 is forcedly created.

As described above, by isolating the interior space 13 of the nacelle 12 and the interior space 17 of the tower 16 from each other so that air is prevented from flowing through therebetween, it is possible to separate the nacelle ventilation mechanism 11 from the tower ventilation mechanism 40, 50, so that carrying out appropriate ventilation corresponding to each mechanism makes it possible to reduce the installation cost and power cost required for ventilation.

Further, since the intake ports 42, 42a, 42b, 52a, 52b for ventilation are disposed on the upper part of the tower 16, it is now possible to use cheaper filters that cause less pressure loss (in some cases filters themselves may be even omitted), which enables cost reduction. For instance, in the case of an offshore wind turbine generator, it may be necessary to prevent corrosion of equipment caused by salt since the tower 16 is disposed on the ocean, where the level of salt concentration in the air is high. Here, by providing the intake ports 42, 42a, 42b, 52a, 52b at a high level which is the upper part of the tower 16, it is possible to use air with relatively low level of salt concentration as ventilation air. Further, by providing the discharge ports 44, 44a, 44b, 54, 64 on the lower part of the tower 16 to carry out forced ventilation by the fans 48, 48a, 48b, 58, 62, it is possible to distribute the air incorporated from the upper part of the tower 16 uniformly over the interior space 17 of the tower 16, which makes it possible to improve the effect of cooling the equipment.

Furthermore, an impurity-substance removing part may be disposed on at least one of the intake ports 42, 42a, 42b, 52a, 52b. Herein, impurity substances mean substances that are included in the air and that may affect equipment disposed in the interior space of a tower: salt, water vapor, or dust, for instance. As illustrated in FIGs. 1 to 5, the impurity-substance removing part may be filters 46, 46a, 46b. Alternatively, the impurity-substance removing part may be a louver which is mainly intended to remove water vapor.

As described above, by providing an impurity-substance removing part on the at least one intake ports 42, 42a, 42b, 52a, 52b, it is possible to prevent impurity substances from entering the interior space 17 of the tower 16 and thus to protect the equipment disposed therein.

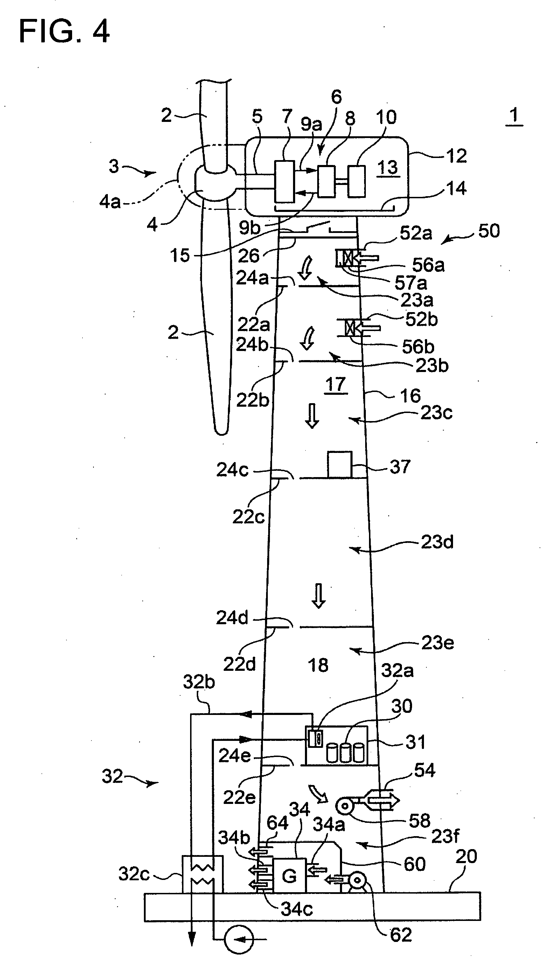

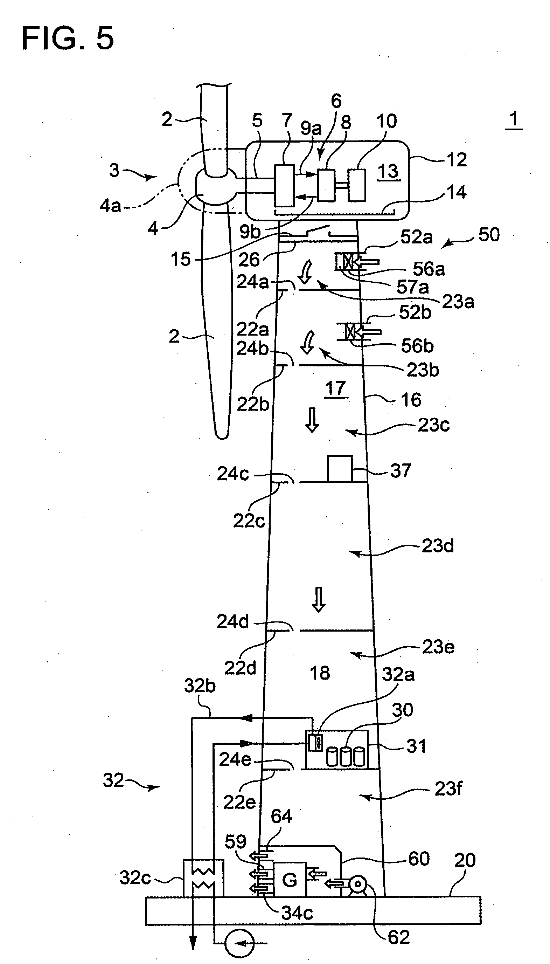

In one embodiment, the transformer 30, which is a heat source, is accommodated in a transformer chamber 31 disposed in the interior space 17 of the tower 16. The transformer chamber 31 has an airtight structure. That is, the transformer chamber 31 is isolated from the ventilation space 18, which is a part of the interior space 17 of the tower 16 outside of the transformer chamber 31, so that ventilation air may not enter the transformer chamber 31. Herein, a ventilation space 18 means a space making up the interior space 17 of the tower 16 but excluding the transformer chamber 31 (see FIGs. 1 to 5) and the generator chamber 60 (see FIGs. 4 and 5), which are maintained to be airtight.

This transformer chamber 31 (transformer 30) is configured to be cooled by a transformer cooling mechanism 32, independently from the tower ventilation mechanism 40, 50. The transformer cooling mechanism 32 may be configured to cool the air inside the transformer chamber 31 by water. For instance, the transformer cooling mechanism 32 includes a transformer-chamber cooler 32a, a coolant water line 32b for supplying coolant water as coolant to the transformer-chamber cooler 32a, and a heat exchanger 32c for cooling the coolant water by exchanging its heat with the seawater or the like. The transformer-chamber cooler 32a includes a fan for circulating air inside the transformer chamber 31 and a part of the coolant water line 32b through which the coolant water flows. Then, the air cooled by the coolant water flowing through the coolant water line 32b in the transformer chamber 31 is circulated by the fan, so that the transformer 30 is cooled. Here, accompanying operation of the wind turbine power generating apparatus 1, a large amount of heat is generated in the transformer 30, which may cause the transformer chamber 31 to have higher temperature than the ventilation space 18 of the tower 16 even though the transformer 30 is cooled by the transformer cooling mechanism 32. In such a case, heat is also discharged to the outside of the ventilation space 18 from the transformer chamber 31, the heat being discharged to the outside of the tower 16 by the ventilation flow created by the tower cooling mechanism 40, 50.

According to the above embodiment, a transformer chamber 31 which is isolated from the ventilation space in the tower 16 is disposed and the transformer cooling mechanism 32 is used to cool the transformer chamber 31 (transformer 30) by water cooling which has higher cooling performance than air. As a result, it is possible to effectively cool the transformer 30.

A backup generator 34 is disposed in the interior space 17 of the tower 16. The backup generator 34 is disposed on a layer (floor) 23 positioned in a path of ventilation flow which flows toward the at least one discharge ports 44, 44a, 44b, 54, 64 disposed on the lower part of the tower 16 from the at least one intake ports 42, 42a, 42b, 52a, 52b disposed on the upper part of the tower 16. In the exemplary configurations illustrated in FIGs. 1 to 5, the backup generator 34 is disposed on the floor 23f of the lowest layer. Here, the backup generator 34 means a generator which is not used during normal operation of the wind turbine power generating apparatus 1, but is used under, for instance, circumstances where an external power source cannot be secured. For instance, the backup generator 34 is used to operate rotating devices and as a power source for lightings in order to carry out maintenance of the equipment while the wind turbine power generating apparatus 1 is stopped for a long period of time.

As described above, by arranging the backup generator 34 in the path of the ventilation flow, it is possible to discharge the heat generated by the backup generator 34 efficiently by the ventilation flow. Also, since the backup generator 34 is not regularly used, the fan may be driven in accordance with the amount of heat generation of the backup generator 34 only when it is used, which makes it possible to reduce the running cost of power.

The backup generator 34 may be an engine generator which uses the ventilation flow as combustion air. In this case, the backup generator 34 includes an intake part 34a for incorporating the air inside the interior space 17 of the tower 16 as combustion air and a combustion-gas discharge part 34b for directly discharging combustion gas which is discharged by driving of the backup generator 34 to the outside of the tower 16. Further, the air incorporated from the intake part 34a may be used to cool (air cooling) the backup generator 34, in case of which the backup generator 34 includes a coolant-air discharge part 34c for discharging air that has been used to cool the backup generator 34 separately from the combustion-gas discharge part 34b. The combustion-gas discharge part 34b may be configured to discharge combustion air to the outside of the tower 16 directly without passing through the interior space 17 of the tower 16. As a result, it is possible to prevent substances included in the combustion gas from being accumulated in the interior space 17 of the tower 16. Similarly, the coolant-air discharge part 34c may be also configured to discharge air to the outside of the tower 16 directly, which makes it possible to smoothly discharge heat generated by the backup generator 34 to the outside of the tower 16. Also, the combustion-gas discharge part 34b and the coolant-air discharge part 34c may be treated similarly to the discharge ports, i.e., they may be disposed on the lower part of the tower 16 to promote creation of the ventilation flow, which flows toward the lower part from the upper part of the tower 16.

The specific configuration of each exemplary configuration will be illustrated below.

In the first exemplary configuration illustrated in FIG. 1, an intake port 42 is disposed on the upper part of the tower 16, and a discharge port 44 is disposed on the lower part of the tower 16. The intake port 42 includes a filter 46 for removing impurity substances and a forced draft fan 48 for incorporating outside air into the interior space 17 of the tower 16. In one embodiment, the intake port 42, the filter 46 and the fan 48 are disposed on the floor 23a of the highest layer, while the discharge port 44 is disposed on the floor 23f of the lowest layer. The discharge port 44 has an opening area that causes such pressure loss that the tower 16 is maintained to have positive pressure inside in accordance with the performance of the fan 48, the opening area and pressure loss of the intake port 42, or the like. Here, the discharge port 44 may include a filter too, in case of which the opening area of the discharge port 44 may be set taking account of the pressure loss due to the filter. Further, when an engine generator which uses the ventilation flow as combustion air is used as the backup generator 34, the above described combustion-air discharge part 34b and coolant-air discharge part 34c are also part of the at least one discharge ports in the wind turbine power generating apparatus 1. Thus, the opening area of the discharge port 44 is set taking account of the amount of discharge of these discharge parts 34b, 34c.

In a wind turbine power generating apparatus 1 with the above configuration, the ventilation air, which has been incorporated from the intake port 42 to the interior space 17 of the tower 16 by the fan 48, creates ventilation flow toward the lower part from the upper part of the tower 16, and then becomes discharged mainly from the discharge port 44 on the lower part of the tower 16.

As described above, by creating ventilation flow while maintaining the interior space 17 of the tower 16 to have positive pressure, it is possible to achieve a tower structure which is unlikely to allow impurity substances to enter the interior space 17 of the tower 16 while smoothly discharging the heat generated by the equipment disposed in the interior space 17 of the tower 16 to the outside of the tower 16.

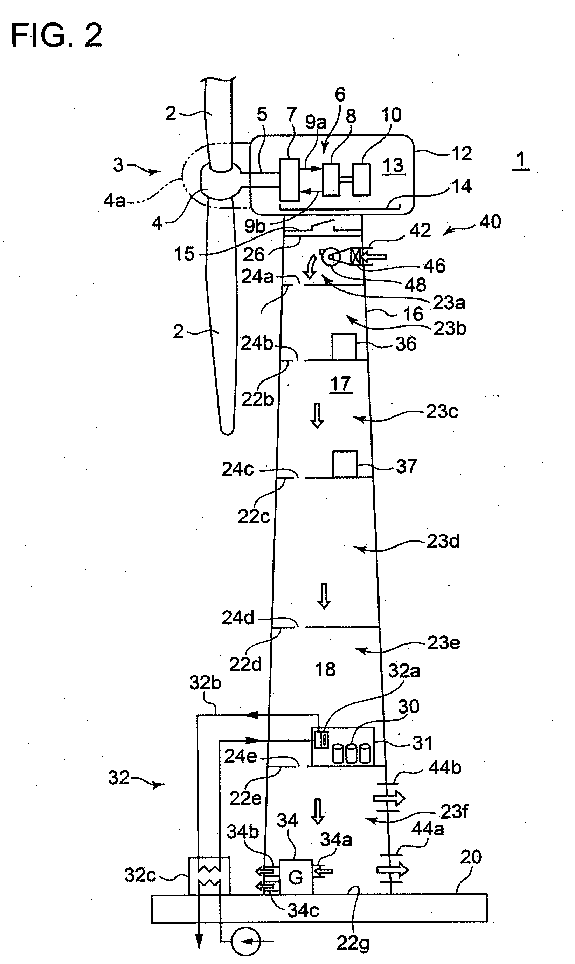

The second exemplary configuration illustrated in FIG. 2 is a modified example of the first exemplary configuration, in which two discharge ports 44a, 44b are disposed on the lower part of the tower 16. In one embodiment, the two discharge ports 44a, 44b are disposed on the lowest floor 23f. Two discharge ports 44a, 44b are disposed on different positions varied in the height direction in view of securing strength of the tower 16. Of course, the two discharge ports 44a, 44b may be disposed on different floors in view of securing strength of the tower 16. Also in the case where more than one discharge port 44a, 44b are disposed as in the second exemplary configuration, each discharge port 44a, 44b is configured to have an opening area which causes such pressure loss that the tower 16 is maintained to have positive pressure inside in accordance with the performance of the fan 48, the opening area and pressure loss of the intake port 42, or the like. By providing a plurality of discharge ports 44a, 44b, it is possible to reduce the opening area of each discharge port 44a, 44b and to prevent considerable decrease in the strength at the lower part of the tower 16 where large gravity load is received from the tower 16 or the nacelle 12.

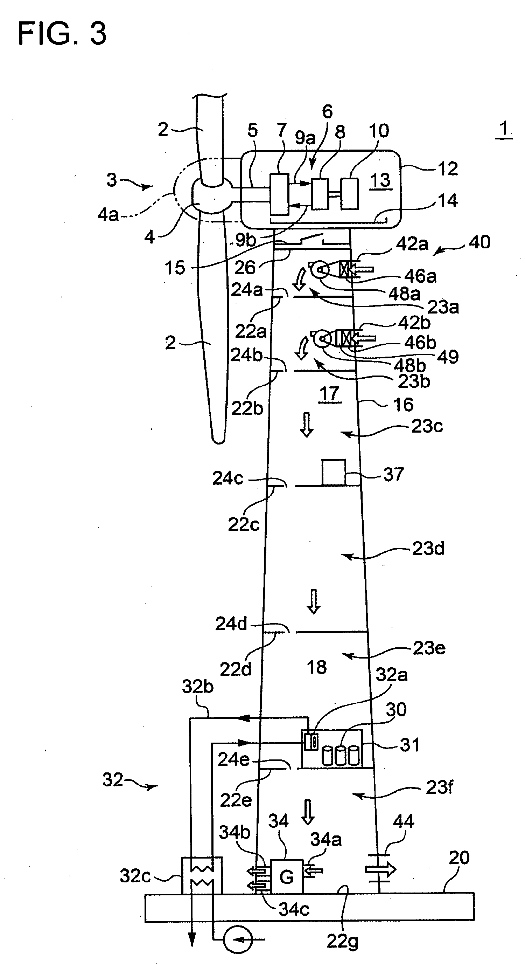

The third exemplary configuration illustrated in FIG. 3 is another modified example of the first exemplary configuration, in which two intake ports 42a, 42b are disposed on the upper part of the tower 16. In one embodiment, the intake port 42a is disposed on the highest floor 23a, while the intake port 42b is disposed on the floor 23b below the highest floor 23a. As described above, by providing the intake ports 42a, 42b on different positions in the vertical direction, it is possible to prevent significant decrease in the strength of the tower 16. Of course, the two intake ports 42a, 42b may be disposed on the same floor, but on different positions in the height direction. Further, filters 46a, 46b are disposed on the intake ports 42a, 42b, respectively, preventing impurity substances from entering the interior space 17 from the outside through ventilation. Also, forced draft fans 48a, 48b are disposed on the intake ports 42a, 42b, respectively, creating ventilation flow which flows toward the lower part from the upper part of the tower 16. Moreover, similarly to the first exemplary configuration, the discharge port 44 has an opening area which causes such pressure loss that the tower 16 is maintained to have positive pressure inside in accordance with the performance of the fans 48a, 48b, the opening area and pressure loss of the intake ports 42a, 42b, or the like.

Generally, while the floors 23a to 23f of the interior space 17 of the tower 16 are in communication with one another via opening parts 24a to 24e such as passages for equipment and workers to transfer, the floors 23a to 23f are mostly partitioned from one another by the floor boards 22a to 22e, which makes it difficult for the air to flow through. Thus, by providing the intake ports 42a, 42b on the plurality of floors 23a, 23b as in the above configuration, it is possible to promote ventilation in the tower 16.

Further, in the third exemplary configuration, a damper 49 is disposed on the intake port 42b as an intake-air non-return part. The damper 49 is configured to be capable of adjusting the amount of intake air. In the case where a plurality of intake ports 42a, 42b are disposed on the tower 16, when the balance is lost in the amount of intake air from the intake ports 42a, 42b, there may be caused reverse flow of the ventilation air flowing toward outside from the interior space 17 of the tower 16 through the intake ports 42a, 42b. In such a case, the amount of intake air incorporated through the intake port 42b is adjusted by the damper 49. With such a damper 49, it is possible to prevent reverse flow of the intake air, and to carry out smooth ventilation. Although FIG. 3 illustrates a configuration in which the damper 49 is disposed on the intake port 42b, the damper 49 may be disposed on the intake port 42a, or both of the intake ports 42a, 42b.

In the fourth exemplary configuration illustrated in FIG. 4, unlike the first to third exemplary configurations, no fan is disposed on the intake ports 52a, 52b while an induced draft fan 58 is disposed on the discharge port 54 at the lower part of the tower 16. In one embodiment, the intake port 52a includes a filter 56a for removing impurity substances and a damper 57a for adjusting the amount of intake air. The intake port 52a, the filter 56a, and the damper 57a are disposed on the highest floor 22a. Further, the intake port 52b includes a filter 56b for removing impurity substances. The intake port 52b and the filter 56b are disposed on the floor 22b below the highest floor 22a. The intake ports 52a, 52b each have an opening area that causes such pressure loss that the tower 16 is maintained to have negative pressure inside in accordance with the performance of the fan 58, the opening area and pressure loss of the discharge port 54, or the like. Here, in the case where the backup engine generator 34, which will be described below, is disposed in the interior space 17 of the tower 16, the opening area of each intake port 52a, 52b is set taking account of the performance of the fan 62 disposed in the backup chamber 60, and also the opening area and pressure loss of the discharge port 64, the combustion-gas discharge part 34b, and the coolant-air discharge part 34c, or the like disposed in the backup chamber 60. As described above, by maintain the interior space of the tower to have negative pressure inside, it is possible to prevent gas, or liquid, as the case may be, from leaking to the outside, and to thus discharge the gas and liquid under control.

In one embodiment, a generator chamber 60 formed to be substantially airtight from the ventilation space 18 is disposed in the interior space 17 of the tower 16 and a backup engine generator 34 is accommodated in the generator chamber 60. The backup generator 34 is configured to use the ventilation flow as combustion air. A fan 62 which induces the ventilation air in the ventilation space 18 to be sent into the generator chamber 60 is disposed. Further, a discharge port 64 which discharges the air inside the generator chamber 60 to the outside of the tower 16 may be also disposed in the generator chamber 60. The backup generator 34 includes an intake part 34a for incorporating the air in the generator chamber 60 as combustion air and a combustion-air discharge part 34b for directly discharging combustion gas which is exhausted by driving of the backup generator 34 to the outside of the tower 16. Further, the air inside the generator chamber 60, which has been incorporated through the intake part 34a, may be used for cooling (air cooling) the backup generator 34, in case of which the backup generator 34 includes a coolant-air discharge part 34c for discharging the air having been used for cooling the backup generator 34, separately from the combustion-gas discharge part 34b.

As described above, in the case where the backup generator 34 is an engine generator, the ventilation flow can be used for cooling the backup generator 34, and also as combustion air, which enables effective use of the ventilation flow.

Furthermore, by accommodating the backup generator 34 in the generator chamber 60, it is possible to adjust the amount of ventilation of the generator chamber 60 separately from the ventilation space 18 of the tower 16, so that ventilation of the interior space 17 of the tower 16 can be carried out efficiently by operating the ventilation mechanism only when the generator chamber 60 is in use. Also, in the case where the backup generator 34 is an engine generator, there may be impurity substances included in the exhaust air exhausted from the backup generator 34. Thus, the backup generator 34 is disposed in the generator chamber 60, which is isolated from the ventilation space 18 of the tower 16, and the exhaust air from the backup generator 34 is directly discharged to the outside, so that it is possible to protect other equipment arranged in the ventilation space 18 of the tower 16.

In one embodiment, the fan 62, the discharge port 64, the combustion-gas discharge part 34b and the coolant-air discharge part 34c are configured such that the generator chamber 60 is maintained to have positive pressure inside. When the ventilation space 18 of the tower 16 is maintained to have negative pressure, a backup generator 34 being disposed in the negative pressure atmosphere may lead to shortage of combustion air, causing incomplete combustion in the engine of the backup generator 34. Thus, a generator chamber 60 which is maintained to have positive pressure is disposed in the interior space 18 of the tower 16 and a backup generator 34 is disposed in the generator chamber 60. As a result, it is possible to achieve stable combustion in the engine, which enables the backup generator 34 to be driven stably.

Also, in the above described first to third exemplary configurations, a configuration in which a backup generator 34 is accommodated in a generator chamber 60 may be employed. As a result, it is possible to prevent combustion gas exhausted from the backup generator 34 from flowing into the ventilation space 18 of the tower 16.

The fifth exemplary configuration illustrated in FIG. 5 is a modification of the fourth exemplary configuration. An induced draft fan 58 is not disposed on the discharge port 54 on the lower part of the tower 16, and the ventilation flow is created only by the fan 62 disposed in the generator chamber 60. As a result, the amount of ventilation air passing through the generator chamber 60 is increased, which makes it possible to effectively cool the backup generator 34 upon driving the backup generator.

The wind turbine power generating apparatus 1 described in the first to fifth exemplary configuration may further include the following configuration.

In one embodiment, when the entire length of the tower 16 is at least 80m, one or more intake ports 42, 42a, 42b, 52a, 52b may be disposed in the range of not greater than 15% of the entire length of the tower 16 from the upper end of the tower 16. Here, the entire length of the tower 16 is a distance in the vertical direction from the isolation part 26, which is disposed between the tower 16 and the nacelle 12, to the bottom surface 22g of the lowest floor 23f of the tower 16. In other words, it is a distance in the vertical direction from the upper end to the lower end of the interior space 17 of the tower 16.

As described above, by providing the intake ports 42, 42a, 42b, 52a, 52b at high altitude around which the concentration level of impurity substances is low, it is possible to further reduce the ventilation cost. Specifically, according to the findings of the present inventors, with regard to the distribution of salt concentration in the height direction, the salt concentration decreases in an exponential manner with the height increase from the water surface or the earth surface, and the salt concentration generally decreases by half in the vicinity of a point 68m high from the water surface or the earth surface. For instance, in the case of an offshore wind turbine power generating apparatus, while the average salt concentration near the water surface is 20µg/m³, it is less than 10µg/m³ at 68m from the water surface. That is, in the case of a tower 16 that is 80m in height, by providing the intake ports 42, 42a, 42b, 52a, 52b disposed at a level higher than the 68m height that is within 15% from the upper end of the tower 16, it is possible to use air with low salt concentration for ventilation of the interior space 17 of the tower 16. As a result, it is possible to reduce the frequency of ventilation of filters for removing salt, for instance, or to keep the performance of the filters low, which enables reduction of the ventilation cost. Here, in a case where the tower 16 includes a plurality of intake ports 42a, 42b, 52a, 52b, at least one intake port may be disposed within the range not greater than 15% from the upper end of the tower 16.

In another embodiment, the intake ports 42, 42a, 52a may be disposed between the isolation part 26 isolating the interior space 13 of the nacelle 12 from the interior space 17 of the tower 16 and a floor board 22a closest to this isolation part 26.

A gap between the isolation part 26 isolating the interior space 13 of the nacelle 12 from the interior space 17 of the tower 16 and the floor board 22a closest to this isolation part 26 is the highest layer in the interior space 17 of the tower 16. This layer would be at the highest from among the positions where the outside air can be incorporated into the interior space 17 of the tower 16, and thus the concentration of impurity substances around this level is the lowest. Accordingly, by providing the intake ports 42, 42a, 52a here, it is possible to further reduce the ventilation cost.

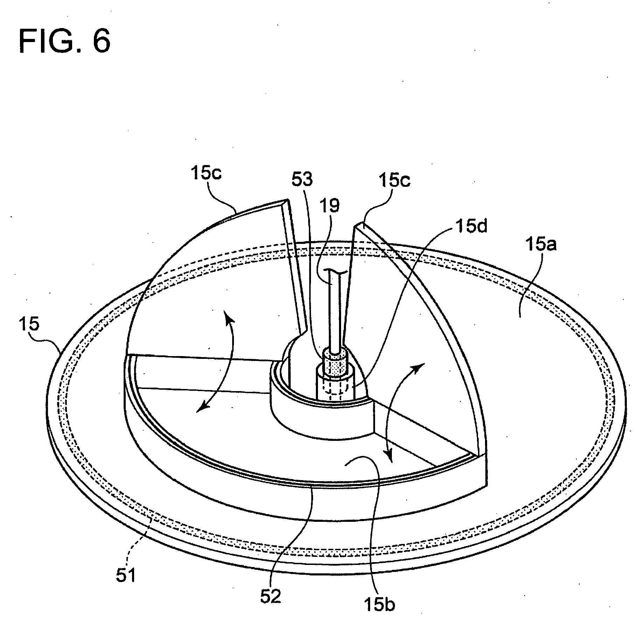

FIG. 6 is a perspective view of an example of a sealing structure in which an oil pan is used.

In one embodiment, the wind turbine power generating apparatus 1 includes a floor board formed by an oil pan 15 illustrated in FIG. 6, and the oil pan 15 is configured to serve as an isolation part 26 (see FIG. 1). The oil pan 15 includes a disc-like oil pan body 15a, an oil pan opening 15b formed on the oil pan body 15a, a cover member 15c configured to be capable of opening and closing the oil pan opening 15b, and a cylinder part 15d formed on the oil pan body 15a. The oil pan body 15a is disposed above the floor board 22a of the highest layer, and between the interior space 13 of the nacelle 12 and the interior space 17 of the tower 16. The oil pan opening 15b is, for instance, provided for transferring the equipment disposed in the interior space 13 of the nacelle 12, or the workers thereof. The oil pan opening 15b is disposed on the bulged portion of the oil pan body 15a, and it may be closable by the cover member 15c. As a result, if the oil pan opening 15b is closed by the cover member 15c at normal times, it is possible to receive oil by the oil pan 15 even when oil such as operating oil of the hydraulic transmission 6 (see FIG. 1) leaks out by any chance. Further, the cylinder part 15d, through which floor-passing members such as electric cables and pipes run, is disposed on the oil pan body 15a.

The oil pan 15 having the above configuration is configured to isolate the interior space 13 of the nacelle 12 from the interior space 17 of the tower 16 so that gas does not flow through therebetween. Specifically, in a case where the oil pan body 15a is disposed on a flange (not illustrated) which protrudes toward the inner circumferential side of the tower 16, an annular sealing member is disposed on the contacting surface between the oil pan body 15a and the flange. As a result, it is possible to prevent the air from flowing through from a gap between the oil pan body 15a and the tower 16. Also, a sealing member 52 is also disposed on the contacting surface of the oil pan opening 15b and the cover member 15c in order to prevent the air from flowing through from a gap between the oil pan opening 15b and the cover member 15c. Moreover, a sealing member 53 is also disposed between the cylinder part 15d and the floor-passing member 19 in order to prevent the air from flowing through from the cylinder part 15d. As a result, by making the oil pan 15 function to isolate the interior space 13 of the nacelle 12 from the interior space 17 of the tower 16, it is not necessary to additionally install a structure for isolating the interior space 13 of the nacelle 12 from the interior space 17 of the tower 16, which enables simplifying the structure of the tower 16.

As described above, according to the above embodiments, the interior space 13 of the nacelle 12 is isolated from the interior space 17 of the tower 16 so that the air is prevented from flowing through therebetween, and thus carrying out appropriate ventilation which corresponds to each space enables reduction of the installation cost and power cost required for ventilation.

Further, as the intake ports 42, 42a, 42b, 52a, 52b for ventilation are disposed on the upper part of the tower 16, it is possible to use air with low concentration of impurity substances as ventilation air and thus to use cheap filters 46, 46a, 46b, 56a, 56b with less pressure loss, which makes it possible to reduce the cost.

Moreover, by providing the discharge ports 44, 44a, 44b, 54, 64 on the lower part of the tower 16 to forcedly ventilate with the fans 48, 48a, 48b, 58, 62, it is possible to evenly distribute the air incorporated from the upper part of the tower 16 over the interior space 17 of the tower 16, which makes it possible to improve the effect of cooling the equipment.

The wind turbine power generating apparatus 1 being a renewable energy power generating apparatus illustrated in the above embodiments may be a floating wind turbine power generating apparatus. A floating wind turbine power generating apparatus includes a floating body floating on the water surface, a tower disposed standing upright on the floating body, and a nacelle supported on an upper part of the tower. A floating wind turbine power generating apparatus is disposed on the ocean, which increases the possibility that much salt is contained in the surrounding air, which may cause corrosion of equipment. Thus, by employing a configuration of the above described embodiments for a floating wind turbine power generating apparatus, it is possible to carry out ventilation for the interior space of the tower using air around the upper part of the tower, the air including less salt.

Embodiments of the present invention were described in detail above, but the present invention is not limited thereto, and various amendments and modifications may be implemented within a scope that does not depart from the present invention.

### Reference Signs List

- 1: Wind turbine power generating apparatus
- 2: Blade
- 3: Rotor
- 4: Hub
- 5: Rotational shaft
- 6: Drive train (hydraulic transmission)
- 7: Hydraulic pump
- 8: Hydraulic motor
- 10: Generator
- 11: Nacelle ventilation mechanism
- 11a: Intake port
- 11b: Discharge port
- 11c: Fan
- 12: Nacelle
- 13: Interior space
- 14,15: Oil pan
- 15a: Oil pan body
- 15b: Oil pan opening
- 15c: Cover member
- 15d: Cylinder part
- 16: Tower
- 17: Interior space
- 18: Ventilation space
- 19: Floor-passing member
- 20: Base
- 22 (22a to 22e): Floor board
- 22g: Bottom surface
- 23 (23a to 23f): Floor
- 24 (24a to 24e): Opening part
- 26: Isolation part
- 30: Transformer
- 31: Transformer chamber
- 32: Transformer cooling mechanism
- 32a: Transformer chamber cooler
- 32b: Coolant water line
- 32c: Heat exchanger
- 34: Backup generator
- 34a: Intake part
- 34b: Combustion air discharge part
- 34c: Coolant air discharge part
- 36, 37: Equipment
- 40: Tower ventilation mechanism
- 42, 42a, 42b: Intake port
- 44, 44a, 44b, 54, 64: Discharge port
- 46, 46a, 46b: Filter
- 48, 48a, 48b, 58, 62: Fan
- 49,57: Damper
- 51 to 53: Sealing member
- 60: Generator chamber

## Claims

1. A renewable energy power generating apparatus (1) for generating electric power from renewable energy, comprising:
a rotational shaft (5) configured to rotate by the renewable energy;
a generator (10) configured to generate electric power by rotation of the rotational shaft (5);
a nacelle (12) which accommodates the rotational shaft (5);
a tower (16) configured to support the nacelle (12);
at least one heat source disposed in an interior space (17) of the tower (16); and
a tower ventilation mechanism (40) configured to create ventilation flow in the interior space (17) of the tower (16) so that heat from the at least one heat source is discharged to an outside of the tower (16),
wherein an interior space (13) of the nacelle (12) and the interior space (17) of the tower (16) are isolated from each other so that air is prevented from flowing therebetween, and
wherein the tower ventilation mechanism (40) includes:
at least one intake port (42,42a,42b,52a,52b) disposed on an upper part of the tower (16);
at least one discharge port (44,44a,44b,54,64) disposed on a lower part of the tower; and
a fan (48,48a,48b,58,62) configured to forcedly create the ventilation flow, which flows downward in a vertical direction from the intake port to the discharge port
**characterized in that** the entire length of the tower (16) is at least 80m, and
the at least one intake port (42,42a,42b,52a,52b) is disposed within a range of not greater than 15% of the entire length of the tower (16) from an upper end of the tower.

2. The renewable energy power generating apparatus (1) according to claim 1, wherein the at least one discharge port (44,44a,44b,54,64) has an opening area which causes such pressure loss that the tower (16) is maintained to have positive pressure inside.

3. The renewable energy power generating apparatus according to claim 1, wherein the at least one intake port (42,42a,42b,52a,52b) has an opening area which causes such pressure loss that the tower (16) is maintained to have negative pressure inside.

4. The renewable energy power generating apparatus (1) according to any one of claims 1 to 3,
wherein the interior space (17) of the tower (16) is divided into a plurality of layers by at least one floor board (22) in the vertical direction, and
wherein the tower ventilation mechanism (40) includes an intake-air non-return part provided for at least one of the intake ports that are disposed on different layers of the tower (16), respectively.

5. The renewable energy power generating apparatus (1) according to any one of claims 1 to 4, wherein the tower ventilation mechanism (40) includes an impurity-substance removing part disposed on the at least one intake port.

6. The renewable energy power generating apparatus (1) according to any one of claims 1 to 5,
wherein the interior space (17) of the tower (16) is divided into a plurality of layers in the vertical direction, and
wherein the at least one heat source includes a backup generator (34) disposed on a layer which is positioned in a path of the ventilation flow from among the plurality of layers.

7. The renewable energy power generating apparatus (1) according to claim 6, wherein the backup generator (34) is an engine generator which uses the ventilation flow as combustion air.

8. The renewable energy power generating apparatus (1) according to claim 6 or 7,
wherein the interior space (17) of the tower (16) includes: a ventilation space (18) which is maintained to have negative pressure and through which the ventilation flow passes; and a generator chamber (60) which is maintained to have positive pressure and which is isolated from the ventilation space (18), and
wherein the backup generator (34) is accommodated in the generator chamber (60).

9. The renewable energy power generating apparatus (1) according to claim 6 or 7,
wherein the interior space (17) of the tower (16) includes: a ventilation space (18) through which the ventilation flow passes; and a generator chamber (60) which is isolated from the ventilation space (18) and into which a part of the ventilation flow is incorporated as ventilation air, and
wherein the backup generator (34) is accommodated in the generator chamber.

10. The renewable energy power generating apparatus (1) according to any one of claims 1 to 9,
wherein the at least one heat source includes a transformer (30) connected to the generator (10),
wherein the interior space (17) of the tower (16) includes: a ventilation space (18) through which the ventilation flow passes; and a transformer chamber (31) which is isolated from the ventilation space (18) and which accommodates the transformer (30), and
wherein the renewable energy power generating apparatus further comprises a coolant water line (32b) which is disposed in the transformer chamber (30) and configured to convey coolant water for cooling the transformer (30).

11. The renewable energy power generating apparatus (1) according to any one of claims 1 to 10,
wherein the interior space (17) of the tower (16) is divided into a plurality of layers by at least one floor board (22) in the vertical direction, and
wherein the at least one intake port (42,42a,42b,52a,52b) is disposed between: an isolation part (26) between the interior space (13) of the nacelle (12) and the interior space (17) of the tower (16); and a floor board (22) closest to the isolation part (26).

12. The renewable energy power generating apparatus (1) according to any one of claims 1 to 11, further comprising
an oil pan (14,15) disposed between the interior space (17) of the tower (16) and the interior space (13) of the nacelle (12) and configured to receive oil which has leaked out from equipment disposed in the interior space of the nacelle (12),
wherein the oil pan (14,15) is configured to isolate the interior space (13) of the nacelle (12) and the interior space (17) of the tower (16) from each other.

13. The renewable energy power generating apparatus (1) according to any one of claims 1 to 12,
wherein the equipment includes a hydraulic transmission configured to transmit rotation of the rotational shaft (5) to the generator (10).

14. The renewable energy power generating apparatus (1) according to any one of claims 1 to 13,
wherein the renewable energy power generating apparatus is a floating wind turbine power generating apparatus in which the tower is disposed on a floating body.

## Patentansprüche

1. Stromerzeugungsvorrichtung (1) vom Typ erneuerbare Energie zum Erzeugen von elektrischem Strom aus erneuerbarer Energie, umfassend:
eine Drehwelle (5), die dazu ausgebildet ist, durch die erneuerbare Energie gedreht zu werden,
einen Generator (10), der dazu ausgebildet ist, durch Drehung der Drehwelle (5) elektrischen Strom zu erzeugen,
eine Gondel (12), welche die Drehwelle (5) aufnimmt,
einen Turm (16), der dazu ausgebildet ist, die Gondel (12) zu tragen,
mindestens eine Wärmequelle, die in einem Innenraum (17) des Turms (16) angeordnet ist, und
einen Turmlüftungsmechanismus (40), der dazu ausgebildet ist, in dem Innenraum (17) des Turms (16) eine Lüftungsströmung zu erzeugen, so dass Wärme von der mindestens einen Wärmequelle aus dem Turm (16) nach außen abgeführt wird,
wobei ein Innenraum (13) der Gondel (12) und der Innenraum (17) des Turms (16) voneinander getrennt sind, so dass verhindert wird, dass Luft zwischen diesen strömen kann, und
wobei der Turmlüftungsmechanismus (40) umfasst:
mindestens einen Einlasskanal (42, 42a, 42b, 52a, 52b), der an einem oberen Teil des Turms (16) angeordnet ist,
mindestens einen Auslasskanal (44, 44a, 44b, 54, 64), der an einem unteren Teil des Turms angeordnet ist, und
einen Ventilator (48, 48a, 48b, 58, 62), der dazu ausgebildet ist, die Lüftungsströmung, die in einer senkrechten Richtung von dem Einlasskanal zu dem Auslasskanal nach unten strömt, erzwungen zu erzeugen,
**dadurch gekennzeichnet, dass** die gesamte Länge des Turms (16) mindestens 80 m beträgt und
der mindestens eine Einlasskanal (42, 42a, 42b, 52a, 52b) innerhalb eines Bereichs von höchstens 15 % der gesamten Länge des Turms (16) von einem oberen Ende des Turms angeordnet ist.

2. Stromerzeugungsvorrichtung (1) vom Typ erneuerbare Energie nach Anspruch 1, wobei der mindestens eine Auslasskanal (44, 44a, 44b, 54, 64) eine Öffnungsfläche aufweist, die einen derartigen Druckverlust bewirkt, dass im Inneren des Turms (16) ein Überdruck aufrechterhalten wird.

3. Stromerzeugungsvorrichtung vom Typ erneuerbare Energie nach Anspruch 1, wobei der mindestens eine Einlasskanal (42, 42a, 42b, 52a, 52b) eine Öffnungsfläche aufweist, die einen derartigen Druckverlust bewirkt, dass im Inneren des Turms (16) ein Unterdruck aufrechterhalten wird.

4. Stromerzeugungsvorrichtung (1) vom Typ erneuerbare Energie nach einem beliebigen der Ansprüche 1 bis 3,
wobei der Innenraum (17) des Turms (16) in senkrechter Richtung durch mindestens eine Bodenplatte (22) in mehrere Ebenen geteilt ist, und
wobei der Turmlüftungsmechanismus (40) einen Einlassluftrückstromsperrteil umfasst, der für mindestens einen der Einlasskanäle vorgesehen ist, die jeweils auf verschiedenen Ebenen des Turms (16) angeordnet sind.

5. Stromerzeugungsvorrichtung (1) vom Typ erneuerbare Energie nach einem beliebigen der Ansprüche 1 bis 4, wobei der Turmlüftungsmechanismus (40) einen verunreinigungssubstanzentfernenden Teil umfasst, der an dem mindestens einen Einlasskanal angeordnet ist.

6. Stromerzeugungsvorrichtung (1) vom Typ erneuerbare Energie nach einem beliebigen der Ansprüche 1 bis 5,
wobei der Innenraum (17) des Turms (16) in senkrechter Richtung in mehrere Ebenen geteilt ist, und
wobei die mindestens eine Wärmequelle einen Hilfsgenerator (34) umfasst, der auf einer Ebene aus den mehreren Ebenen angeordnet ist, die in einem Weg der Lüftungsströmung angeordnet ist.

7. Stromerzeugungsvorrichtung (1) vom Typ erneuerbare Energie nach Anspruch 6, wobei der Hilfsgenerator (34) ein Motorgenerator ist, der die Lüftungsströmung als Verbrennungsluft verwendet.

8. Stromerzeugungsvorrichtung (1) vom Typ erneuerbare Energie nach Anspruch 6 oder 7,
wobei der Innenraum (17) des Turms (16) umfasst: einen Lüftungsraum (18), der auf Unterdruck gehalten wird und durch den die Lüftungsströmung hindurchtritt, und eine Generatorkammer (60), die auf Überdruck gehalten wird und die von dem Lüftungsraum (18) getrennt ist, und
wobei der Hilfsgenerator (34) in der Generatorkammer (60) untergebracht ist.

9. Stromerzeugungsvorrichtung (1) vom Typ erneuerbare Energie nach Anspruch 6 oder 7,
wobei der Innenraum (17) des Turms (16) umfasst: einen Lüftungsraum (18), durch den die Lüftungsströmung hindurchtritt, und eine Generatorkammer (60), die von dem Lüftungsraum (18) getrennt ist und in die ein Teil der Lüftungsströmung als Ventilationsluft eingebunden ist, und
wobei der Hilfsgenerator (34) in der Generatorkammer untergebracht ist.

10. Stromerzeugungsvorrichtung (1) vom Typ erneuerbare Energie nach einem beliebigen der Ansprüche 1 bis 9,
wobei die mindestens eine Wärmequelle einen Transformator (30) umfasst, der mit dem Generator (10) verbunden ist,
wobei der Innenraum (17) des Turms (16) umfasst: einen Lüftungsraum (18), durch den die Lüftungsströmung hindurchtritt, und eine Transformatorkammer (31), die von dem Lüftungsraum (18) getrennt ist und die den Transformator (30) aufnimmt, und
wobei die Stromerzeugungsvorrichtung vom Typ erneuerbare Energie ferner eine Kühlwasserleitung (32b) umfasst, die in der Transformatorkammer (30) angeordnet ist und dazu ausgebildet ist, Kühlwasser zum Kühlen des Transformators (30) zu transportieren.

11. Stromerzeugungsvorrichtung (1) vom Typ erneuerbare Energie nach einem beliebigen der Ansprüche 1 bis 10,
wobei der Innenraum (17) des Turms (16) in senkrechter Richtung durch mindestens eine Bodenplatte (22) in mehrere Ebenen geteilt ist, und
wobei der mindestens eine Einlasskanal (42, 42a, 42b, 52a, 52b) angeordnet ist zwischen: einem Trennungsteil (26) zwischen dem Innenraum (13) der Gondel (12) und dem Innenraum (17) des Turms (16), und einer dem Trennungsteil (26) am nächsten liegende Bodenplatte (22) angeordnet ist.

12. Stromerzeugungsvorrichtung (1) vom Typ erneuerbare Energie nach einem beliebigen der Ansprüche 1 bis 11, ferner umfassend
eine Ölwanne (14, 15), die zwischen dem Innenraum (17) des Turms (16) und dem Innenraum (13) der Gondel (12) angeordnet ist und dazu ausgebildet ist, Öl aufzunehmen, das aus Vorrichtungen, die in dem Innenraum der Gondel (12) angeordnet sind, ausgetreten ist,
wobei die Ölwanne (14, 15) dazu ausgebildet ist, den Innenraum (13) der Gondel (12) und den Innenraum (17) des Turms (16) voneinander zu trennen.

13. Stromerzeugungsvorrichtung (1) vom Typ erneuerbare Energie nach einem beliebigen der Ansprüche 1 bis 12,
wobei die Vorrichtungen ein hydraulisches Getriebe umfassen, das dazu ausgebildet ist, Drehung der Drehwelle (5) zu dem Generator (10) zu übertragen.

14. Stromerzeugungsvorrichtung (1) vom Typ erneuerbare Energie nach einem beliebigen der Ansprüche 1 bis 13,
wobei die Stromerzeugungsvorrichtung vom Typ erneuerbare Energie eine schwimmende Windkraftanlage ist, bei welcher der Turm auf einem Schwimmkörper angeordnet ist.

## Revendications

1. Appareil de génération d'énergie à énergie renouvelable (1) pour générer de l'énergie électrique à partir d'une énergie renouvelable, comportant :
un arbre de rotation (5) configuré pour tourner grâce à l'énergie renouvelable ;
une génératrice (10) configurée pour générer l'énergie électrique grâce à une rotation de l'arbre de rotation (5) ;
une nacelle (12) qui reçoit l'arbre de rotation (5) ;
une tour (16) configurée pour supporter la nacelle (12) ;
au moins une source de chaleur disposée dans un espace intérieur (17) de la tour (16) ; et
un mécanisme de ventilation de tour (40) configuré pour créer un flux de ventilation dans l'espace intérieur (17) de la tour (16) de telle sorte que de la chaleur de la au moins une source de chaleur est évacué à l'extérieur de la tour (16),
dans lequel un espace intérieur (13) de la nacelle (12) et l'espace intérieur (17) de la tour (16) sont isolés l'un de l'autre de telle sorte que de l'air est empêché de circuler entre eux, et
dans lequel le mécanisme de ventilation de tour (40) comprend :
au moins un orifice d'admission (42, 42a, 42b, 52a, 52b) disposé sur une partie supérieure de la tour (16) ;
au moins un orifice d'évacuation (44, 44a, 44b, 54, 64) disposé sur une partie inférieure de la tour ; et
un ventilateur (48, 48a, 48b, 58, 62) configuré pour créer de manière forcée le flux de ventilation, qui s'écoule vers le bas selon une direction verticale depuis l'orifice d'admission jusqu'à l'orifice d'évacuation
**caractérisé en ce que** la longueur entière de la tour (16) est au moins de 80 m, et
le au moins un orifice d'admission (42, 42a, 42b, 52a, 52b) est disposé dans une plage qui n'est pas supérieure à 15% de la longueur entière de la tour (16) depuis une extrémité supérieure de la tour.

2. Appareil de génération d'énergie à énergie renouvelable (1) selon la revendication 1, dans lequel le au moins un orifice d'évacuation (44, 44a, 44b, 54, 64) a une section d'ouverture qui amène une perte de pression telle que la tour (16) est maintenue pour avoir une pression positive à l'intérieur.

3. Appareil de génération d'énergie à énergie renouvelable selon la revendication 1, dans lequel le au moins un orifice d'admission (42, 42a, 42b, 52a, 52b) a une section d'ouverture qui amène une perte de pression telle que la tour (16) est maintenue pour avoir une pression négative à l'intérieur.

4. Appareil de génération d'énergie à énergie renouvelable (1) selon l'une quelconque des revendications 1 à 3,
dans lequel l'espace intérieur (17) de la tour (16) est divisé en une pluralité de couches par au moins un plancher (22) selon la direction verticale, et
dans lequel le mécanisme de ventilation de tour (40) comprend une partie anti-retour d'air d'admission prévue pour au moins un des orifices d'admission qui sont disposés sur différentes couches de la tour (16), respectivement.

5. Appareil de génération d'énergie à énergie renouvelable (1) selon l'une quelconque des revendications 1 à 4, dans lequel le mécanisme de ventilation de tour (40) comprend une partie d'enlèvement de substance d'impureté disposée sur le au moins un orifice d'admission.

6. Appareil de génération d'énergie à énergie renouvelable (1) selon l'une quelconque des revendications 1 à 5,
dans lequel l'espace intérieur (17) de la tour (16) est divisé en une pluralité de couches dans la direction verticale, et
dans lequel la au moins une source de chaleur comprend une génératrice de secours (34) disposée sur une couche qui est positionnée dans un passage du flux de ventilation parmi la pluralité de couches.

7. Appareil de génération d'énergie à énergie renouvelable (1) selon la revendication 6, dans lequel la génératrice de secours (34) est une génératrice à moteur qui utilise le flux de ventilation comme air de combustion.

8. Appareil de génération d'énergie à énergie renouvelable (1) selon la revendication 6 ou 7,
dans lequel l'espace intérieur (17) de la tour (16) comprend : un espace de ventilation (18) qui est maintenu pour avoir une pression négative et à travers lequel passe le flux de ventilation ; et une chambre de génératrice (60) qui est maintenue pour avoir une pression positive et qui est isolée de l'espace de ventilation (18), et
dans lequel la génératrice de secours (34) est logée dans la chambre de génératrice (60).

9. Appareil de génération d'énergie à énergie renouvelable (1) selon la revendication 6 ou 7,
dans lequel l'espace intérieur (17) de la tour (16) comprend : un espace de ventilation (18) à travers lequel passe le flux de ventilation ; et une chambre de génératrice (60) qui est isolée de l'espace de ventilation (18) et dans laquelle une partie du flux de ventilation est incorporée comme air de ventilation, et
dans lequel la génératrice de secours (34) est logée dans la chambre de génératrice.

10. Appareil de génération d'énergie à énergie renouvelable (1) selon l'une quelconque des revendications 1 à 9,
dans lequel la au moins une source de chaleur comprend un transformateur (30) relié à la génératrice (10),
dans lequel l'espace intérieur (17) de la tour (16) comprend : un espace de ventilation (18) à travers lequel passe le flux de ventilation ; et une chambre de transformateur (31) qui est isolée de l'espace de ventilation (18) et qui reçoit le transformateur (30), et
dans lequel l'appareil de génération d'énergie à énergie renouvelable comporte en outre une ligne d'eau de refroidissement (32b) qui est disposée dans la chambre de transformateur (30) et configurée pour transporter de l'eau de refroidissement pour refroidir le transformateur (30).

11. Appareil de génération d'énergie à énergie renouvelable (1) selon l'une quelconque des revendications 1 à 10,
dans lequel l'espace intérieur (17) de la tour (16) est divisé en une pluralité de couches par au moins un plancher (22) selon la direction verticale, et
dans lequel le au moins un orifice d'admission (42, 42a, 42b, 52a, 52b) est disposé entre : une partie d'isolation (26) entre l'espace intérieur (13) de la nacelle (12) et l'espace intérieur (17) de la tour (16) ; et un plancher (22) le plus près de la partie d'isolation (26).

12. Appareil de génération d'énergie à énergie renouvelable (1) selon l'une quelconque des revendications 1 à 11, comportant en outre
un bac à huile (14, 15) disposé entre l'espace intérieur (17) de la tour (16) et l'espace intérieur (13) de la nacelle (12) et configuré pour recevoir de l'huile qui a fui d'un équipement disposé dans l'espace intérieur de la nacelle (12),
dans lequel le bac à huile (14, 15) est configuré pour isoler l'un de l'autre l'espace intérieur (13) de la nacelle (12) et l'espace intérieur (17) de la tour (16).

13. Appareil de génération d'énergie à énergie renouvelable (1) selon l'une quelconque des revendications 1 à 12,
dans lequel l'équipement comprend une transmission hydraulique configurée pour transmettre une rotation de l'arbre de rotation (5) à la génératrice (10).

14. Appareil de génération d'énergie à énergie renouvelable (1) selon l'une quelconque des revendications 1 à 13,
dans lequel l'appareil de génération d'énergie à énergie renouvelable est une éolienne flottante dans laquelle la tour est disposée sur un corps flottant.
